# EUROPEAN PATENT APPLICATION

(11) **EP 4 813 502 A1**
(43) Date of publication of application: **30.09.2026**
(21) Application number: 26158307.4
(22) Date of filing: 12.02.2026
(51) Int. Cl.: B01D 53/06

(54) **SOLID DESICCANT DEHUMIDIFICATION WITH TRANSLATING SUBSTRATE AND CONDENSER HEAT REGENERATION**

(30) Priority: 12.02.2025 US 202563757592 P
(71) Applicant: Carrier Corporation, Palm Beach Gardens, FL 33418 (US)
(72) Inventor: KUECK, Aaron, East Syracuse, NY 13057 (US); HERNANDEZ-ALVARADO, Freddy, East Syracuse, NY 13057 (US); COVINGTON, Jefferi, East Syracuse, NY 13057 (US); OGGIANU, Stella Maris, Palm Beach Gardens, FL 33418 (US)
(74) Representative: Dehns

(57) **Abstract**

A dehumidification system (101) is provided and includes a first heat exchanger side (110) for heating a first airflow (A1), a second heat exchanger side (120) for cooling a second airflow (A2) and a dehumidification assembly (130). The dehumidification assembly (130) includes a solid desiccant coated substrate (140) and a mechanism (150) to which the solid desiccant coated substrate (140) is attached. The mechanism (150) is configured to continuously drive movements of the solid desiccant coated substrate (140) between first and second positions. At the first position, the solid desiccant coated substrate (140) faces the second heat exchanger side (120) for dehumidification of the first airflow (A1). At the second position, the solid desiccant coated substrate (140) faces the first heat exchanger side (110) for regeneratively releasing moisture to the second airflow (A2).

## Description

### BACKGROUND

The present invention relates to heating, ventilation, air-conditioning and refrigeration (HVAC&R) systems and, more particularly, to solid desiccant dehumidification with a translating substrate and condenser heat regeneration of an HVAC&R system.

A desiccant is a substance that absorbs moisture from the environment, due to its high affinity for water vapor, thus helping to keep the surrounding area dry. Desiccants typically include hygroscopic materials that attract and hold water vapor from the air to induce or sustain a state of dryness (desiccation) in its vicinity. Industrially, desiccants are widely used for moisture control in packaging, pharmaceuticals, electronics, food preservation and dehumidification systems to maintain product integrity and prevent corrosion.

### BRIEF DESCRIPTION

According to a first aspect of the invention, there is provided a dehumidification system comprising a first heat exchanger side for heating a first airflow, a second heat exchanger side for cooling a second airflow and a dehumidification assembly. The dehumidification assembly includes a solid desiccant coated substrate and a mechanism to which the solid desiccant coated substrate is attached. The mechanism is configured to continuously drive movements of the solid desiccant coated substrate between first and second positions. At the first position, the solid desiccant coated substrate faces the second heat exchanger side for dehumidification of the first airflow. At the second position, the solid desiccant coated substrate faces the first heat exchanger side for regeneratively releasing moisture to the second airflow.

The first and second airflows may be at least one of constituents of a common airflow and constituents of different airflows.

The solid desiccant coated substrate may include a substrate that is porous to the first and second airflows.

A speed that the mechanism continuously drives the movements of the solid desiccant coated substrate may be controllable.

The speed that the mechanism continuously drives the movements of the solid desiccant coated substrate may be controllable based on at least one or more of a solid desiccant type coating the first and second desiccant coated substrates, temperatures of the first and second airflows, relative humidities of the first and second airflows and dehumidification requirements.

The dehumidification system may further include a controller coupled to the mechanism and configured to control the speed.

The mechanism may include a rotating spindle and the solid desiccant coated substrate may include a first solid desiccant coated substrate attached to a first side of the rotating spindle and a second solid desiccant coated substrate attached to a second side of the rotating spindle.

The mechanism may include rollers and the solid desiccant coated substrate may comprise at least a portion of a belt wrapped around the rollers.

According to a second aspect of the invention, there is provided a dehumidification system comprising a first heat exchanger side for heating a first airflow, a second heat exchanger side for cooling a second airflow and a dehumidification assembly. The dehumidification assembly includes first and second supplies of solid desiccant coated beads and a mechanism. The mechanism is configured to arrange the first and second supplies of solid desiccant coated beads in and to switch between first and second arrangements. In the first arrangement, the first and second supplies of solid desiccant coated beads form falling bead curtains adjacent to the second heat exchanger side and the first heat exchanger side, respectively. In the second arrangement, the first and second supplies of solid desiccant coated beads form falling bead curtains adjacent to the first heat exchanger side and the second heat exchanger side, respectively.

The first and second airflows may be at least one of constituents of a common airflow and constituents of different airflows.

The dehumidification system may further include a first set of containers configured to contain the first supply of solid desiccant coated beads and a second set of containers configured to contain the second supply of solid desiccant coated beads.

The mechanism may be configured to transfer the first and second supplies of solid desiccant coated beads between the first and second sets of containers between the first and second arrangements.

The dehumidification system may further include a controller coupled to the mechanism and configured to control a frequency of switching between the first and second arrangements.

The frequency of switching may be controllable based on at least one or more of a solid desiccant type coating the first and second supplies of beads, temperatures of the first and second airflows, relative humidities of the first and second airflows and dehumidification requirements.

According to a third aspect of the invention, there is provided a dehumidification system comprising a first heat exchanger side for heating a first airflow, a second heat exchanger side for cooling a second airflow and a dehumidification assembly. The dehumidification assembly includes first and second solid desiccant coated substrates and a mechanism to which the first and second solid desiccant coated substrates are attached. The mechanism is configured to arrange the first and second solid desiccant coated substrates in and to switch between first and second arrangements. In the first arrangement, the first and second solid desiccant coated substrates are positioned in the second and first airflows, respectively. In the second arrangement, the first and second solid desiccant coated substrates are positioned in the first and second airflows, respectively.

The first and second airflows may be at least one of constituents of a common airflow and constituents of different airflows.

The first and second solid desiccant coated substrates may include substrates that are porous to the first and second airflows.

The mechanism may be configured to translate the first and second solid desiccant coated substrates between the first and second arrangements.

The dehumidification assembly may further include a controller coupled to the mechanism and configured to control a frequency of switching between the first and second arrangements.

The frequency of switching may be controllable based on at least one or more of a solid desiccant type coating the first and second desiccant coated substrates, temperatures of the first and second airflows, relative humidities of the first and second airflows and dehumidification requirements.

Additional features and advantages are realized through the techniques of the present invention. Other embodiments and aspects of the invention are described in detail herein and are considered a part of the technical concept. For a better understanding of the invention with the advantages and the features, refer to the description and to the drawings.

### BRIEF DESCRIPTION OF THE DRAWINGS

For a more complete understanding of this invention, preferred embodiments are now described by way of example only and with reference to the accompanying drawings, wherein like reference numerals represent like parts:
FIG. 1 is a schematic diagram of a dehumidification system including a rotating spindle;
FIG. 2 is a schematic diagram of a dehumidification system including a continuous belt;
FIG. 3 is a schematic diagram of a dehumidification system in which desiccant coated beads form falling curtains; and
FIGS. 4A and 4B are schematic diagrams of a dehumidification system in which desiccant coated substrates are translated between condenser and evaporator sides.

### DETAILED DESCRIPTION

Currently, independent dehumidification in HVAC&R systems based on the use of solid desiccants tends to be limited. This is particularly true in comparison to dehumidification based on the use of liquid desiccants. The relative difficulties in usability of solid desiccants arises from various factors including, but not limited to, the desiccant material being solid and thus unable to be pumped from an evaporator to a condenser. As such, in HVAC&R systems in which solid desiccant is used for dehumidification, regeneration of the solid desiccant is required and typically involves a cyclic temperature and/or pressure profile characterized as a cyclic reversing in refrigerant flow and/or cyclic a switching of airflow paths.

Thus, as will be described below, an HVAC&R system is provided in which solid desiccant is used for dehumidification. The solid desiccant is supported by a substrate that can be moved between or presented to a condenser or a first heat exchanger and an evaporator or a second heat exchanger. This can take many forms including, but not limited to, a rotating cartridge form, a belt form that moves continuously or discontinuously, a formation of coated beads moved by a belt and/or other similar implementations. As a general matter, the substrate allows for air passage therethrough and can include or be provided as screen for example. During fabrication, solid desiccant is coated onto the substrate. During use, the substrate with the solid desiccant coated thereon is moved or presented to the evaporator side of a heat exchanger or to a heat exchanger in an evaporative mode whereby the solid desiccant removes/adsorbs moisture from exterior airflows (i.e., an airstream that can be return air from a conditioned space or outdoor air). During continued use and for regeneration of the solid desiccant, the substrate with the solid desiccant coated thereon is moved to the condenser side of the heat exchanger or to a heat exchanger in a condensing mode whereby the solid desiccant releases moisture to exterior airflows (i.e., or the airstream) and regenerates. The timing or rate of motion of the substrate with the solid desiccant coated thereon can be controlled to optimize the use of the desiccant based on system needs and air conditions.

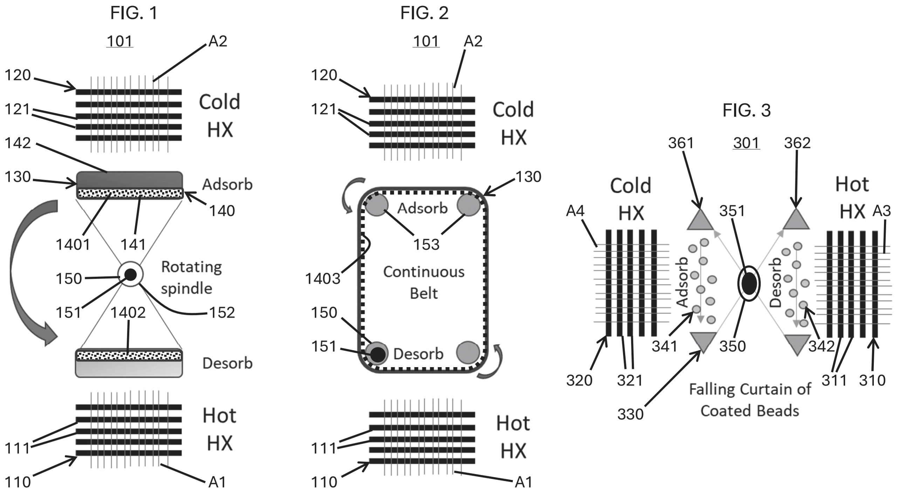

With reference to FIGS. 1 and 2, a dehumidification system 101 is provided and includes a first heat exchanger, such as an electric or gas heater of an air handling unit (AHU) and/or a condenser side 110 including condenser coils 111, for heating a first airflow A1, a second heat exchanger, such as an electric or gas cooler of an AHU and/or an evaporator side 120 including evaporator coils 121, for cooling a second airflow A2 and a dehumidification assembly 130. While the first and second airflows A1 and A2 are illustrated separately in FIGS. 1 and 2, it is to be understood that the first and second airflows A1 and A2 can be at least one of constituents of a common airflow (i.e., within a vapor-compression system including the condenser side 110 and the evaporator side 120, the common airflow flows over and around the condenser coils 111 and the evaporator coils 121) and/or constituents of different airflows.

The following description will relate to the cases in which the first heat exchanger is the condenser side 110 including the condenser coils 111 and the second heat exchanger is the evaporator side 120 including the evaporator coils 121. This is being done for purposes of clarity and brevity and should not be interpreted as limiting the scope of the invention as set out in the appended claims in any way.

The dehumidification assembly 130 includes a solid desiccant coated substrate 140 and a mechanism 150 to which the solid desiccant coated substrate 140 is attached. The solid desiccant coated substrate 140 includes a substrate 141, which is porous to the first and second airflows A1 and A2, and solid desiccant 142. The mechanism 150 is configured to continuously drive movements of the solid desiccant coated substrate 140 between a first position and a second position. At the first position, the solid desiccant coated substrate 140 faces the evaporator side 120 for dehumidification of the first airflow A1 whereupon the solid desiccant coated substrate 140 becomes progressively more saturated over time. At the second position, the solid desiccant coated substrate 140 faces the condenser side 110 for regeneratively releasing moisture to the second airflow A2 to thereby regenerate the solid desiccant coated substrate 140.

A speed that the mechanism 150 continuously drives the movements of the solid desiccant coated substrate 140 can be controllable by controller 151 based at least partially on a type of the solid desiccant 142 as well as other factors including, but not limited to, temperatures of the first and second airflows A1 and A2, relative humidities of the first and second airflows A1 and A2, dehumidification requirements of the dehumidification system 101, etc. The controller 151 can be coupled to the mechanism 150 and can include a processor, a memory, an input/output (I/O) unit by which the processor is communicative with the dehumidification system 101 and sensors deployed therein and a servo unit by which the processor controls operations of the mechanism. The memory has executable instructions stored thereon, which are readable and executable by the processor. When the executable instructions are read and executed by the processor, the processor is caused to receive data and information from the dehumidification system 101 and the sensors and to control the operations of the mechanism 150 via the servo unit at least partially in accordance with the data and information.

As shown in FIG. 1, the mechanism 150 can include a rotating spindle 152. In these or other cases, the solid desiccant coated substrate 140 can include a first solid desiccant coated substrate 1401 attached to a first side of the rotating spindle 152 and a second solid desiccant coated substrate 1402 attached to a second side of the rotating spindle 152. As shown in FIG. 2, the mechanism 150 can include rollers 153. In these or other cases, the solid desiccant coated substrate 140 can include at least a portion (or an entirety) of a belt 1403 wrapped around exterior surfaces of the rollers 153.

With reference to FIG. 3, a dehumidification system 301 is provided and includes a first heat exchanger, such as an electric or gas heater of an AHU and/or a condenser side 310 including condenser coils 311, for heating a first airflow A3, a second heat exchanger, such as an electric or gas cooler of an AHU and/or an evaporator side 320 including evaporator coils 321 for cooling a second airflow A4, and a dehumidification assembly 330. While the first and second airflows A3 and A4 are illustrated separately in FIG. 3, it is to be understood that the first and second airflows A3 and A4 can be at least one of constituents of a common airflow (i.e., within a vapor-compression system including the condenser side 310 and the evaporator side 320, the common airflow flows over and around the condenser coils 311 and the evaporator coils 321) and/or constituents of different airflows.

The following description will relate to the cases in which the first heat exchanger is the condenser side 310 including the condenser coils 311 and the second heat exchanger is the evaporator side 320 including the evaporator coils 321. This is being done for purposes of clarity and brevity and should not be interpreted as limiting the scope of the invention as set out in the appended claims in any way.

The dehumidification assembly 330 includes a first supply of solid desiccant coated beads 341, a second supply of solid desiccant coated beads 342 and a mechanism 350. The mechanism 350 is configured to arrange the first and second supplies of solid desiccant coated beads 341, 342 in and to switch between a first arrangement and a second arrangement. In the first arrangement, as shown in FIG. 3, the first supply of solid desiccant coated beads 341 form a falling bead curtain adjacent to the evaporator side 320 for dehumidification of the airflow A4 whereupon the first supply of solid desiccant coated beads 341 becomes progressively more saturated over time. Also, in the first arrangement, the second supply of solid desiccant coated beads 342 form a falling bead curtain adjacent to the condenser side 310 for regeneratively releasing moisture to the airflow A3 to thereby regenerate the second supply of solid desiccant coated beads 342. In the second arrangement, which is the opposite arrangement of FIG. 3, the second supply of solid desiccant coated beads 342 form a falling bead curtain adjacent to the evaporator side 320 for dehumidification of the airflow A4 whereupon the second supply of solid desiccant coated beads 342 becomes progressively more saturated over time. Also, in the second arrangement, the first supply of solid desiccant coated beads 341 form a falling bead curtain adjacent to the condenser side 310 for regeneratively releasing moisture to the airflow A3 to thereby regenerate the first supply of solid desiccant coated beads 341.

As shown in FIG. 3, the dehumidification system 301 further includes a first set of containers 361 that are configured to contain the first and second supplies of solid desiccant coated beads 341 and 342 and a second set of containers 362 that are configured to contain the second and first supplies of solid desiccant coated beads 342 and 341. In the first arrangement, with the first set of containers 361 having an upper container and a lower container, the first supply of solid desiccant coated beads 341 fall (i.e., drain) from the upper container to the lower container and, with the second set of containers 362 having an upper container and a lower container, the second supply of solid desiccant coated beads 342 fall (i.e., drain) from the upper container to the lower container. In the second arrangement, with the first set of containers 361 having the upper container and the lower container, the second supply of solid desiccant coated beads 342 fall (i.e., drain) from the upper container to the lower container and, with the second set of containers 362 having the upper container and the lower container, the first supply of solid desiccant coated beads 341 fall (i.e., drain) from the upper container to the lower container. The mechanism 350 is configured to transfer the first and second supplies of solid desiccant coated beads 341 and 342 between the first and second sets of containers 361, 362 between the first and second arrangements by, for example, the use of one or more conveyer belts.

The dehumidification system 301 can further include a controller 351 that is coupled to the mechanism 350 and is configured to control a frequency of switching between the first and second arrangements (i.e., to control a frequency of transferring the first and second supplies of solid desiccant coated beads 341 and 342 between the first and second sets of containers) where the frequency of switching is controllable based at least partially on a solid desiccant type coating the first and second supplies of beads 341, 342 as well as other factors including, but not limited to, temperatures of the first and second airflows A3 and A4, relative humidities of the first and second airflows A3 and A4, dehumidification requirements of the dehumidification system 301, etc. The controller 351 can be coupled to the mechanism 350 and can include a processor, a memory, an input/output (I/O) unit by which the processor is communicative with the dehumidification system 301 and sensors deployed therein and a servo unit by which the processor controls operations of the mechanism. The memory has executable instructions stored thereon, which are readable and executable by the processor. When the executable instructions are read and executed by the processor, the processor is caused to receive data and information from the dehumidification system 301 and the sensors and to control the operations of the mechanism 350 via the servo unit at least partially in accordance with the data and information.

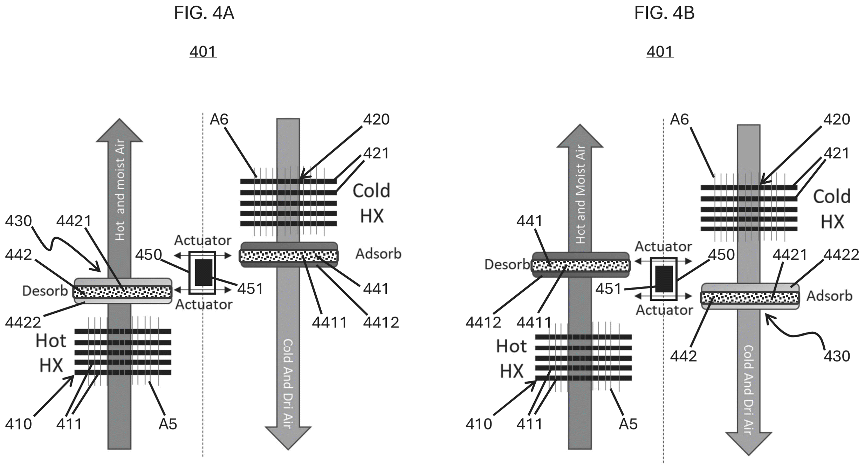

With reference to FIGS. 4A and 4B, a dehumidification system 401 is provided and includes a first heat exchanger, such as an electric or gas heater of an AHU and/or a condenser side 410 including condenser coils 411 for heating a first airflow A5, a second heat exchanger, such as an electric or gas cooler of an AHU and/or an evaporator side 420 including evaporator coils 421 for cooling a second airflow A6 and a dehumidification assembly 430. While the first and second airflows A5 and A6 are illustrated separately in FIGS. 4A and 4B, it is to be understood that the first and second airflows A5 and A6 can be at least one of constituents of a common airflow (i.e., within a vapor-compression system including the condenser side 410 and the evaporator side 420, the common airflow flows over and around the condenser coils 411 and the evaporator coils 421) and/or constituents of different airflows.

The following description will relate to the cases in which the first heat exchanger is the condenser side 410 including the condenser coils 411 and the second heat exchanger is the evaporator side 420 including the evaporator coils 421. This is being done for purposes of clarity and brevity and should not be interpreted as limiting the scope of the invention as set out in the appended claims in any way.

The dehumidification assembly 430 includes a first solid desiccant coated substrate 441, a second solid desiccant coated substrate 442 and a mechanism 450. The first solid desiccant coated substrate 441 includes a substrate 4411, which is porous to the first and second airflows A5 and A6, and solid desiccant 4412. The second solid desiccant coated substrate 442 includes a substrate 4421, which is porous to the first and second airflows A5 and A6, and solid desiccant 4422. The mechanism 450 is configured to arrange the first and second solid desiccant coated substrates 441, 442 in and to switch between a first arrangement and a second arrangement. In the first arrangement, as shown in FIG. 4A, the first solid desiccant coated substrate 441 is positioned in the second airflow A6 of the evaporator side 420 for dehumidification of the second airflow A6 whereupon the first solid desiccant coated substrate 441 becomes progressively more saturated over time. Also, in the first arrangement, the second solid desiccant coated substrate 442 is positioned in the first airflow A5 of the condenser side 410 for regeneratively releasing moisture to the first airflow A5 to thereby regenerate the second solid desiccant coated substrate 442. In the second arrangement, as shown in FIG. 4B, the second solid desiccant coated substrate 442 is positioned in the second airflow A6 of the evaporator side 420 for dehumidification of the second airflow A6 whereupon the second solid desiccant coated substrate 442 becomes progressively more saturated over time. Also, in the second arrangement, the first solid desiccant coated substrate 441 is positioned in the first airflow A5 of the condenser side 410 for regeneratively releasing moisture to the first airflow A5 to thereby regenerate the first solid desiccant coated substrate 441.

As shown in FIGS. 4A and 4B, the mechanism 450 can be configured to switch the positions of the first and second solid desiccant coated substrates 441, 442 between the condenser side 410 and the evaporator side 420 between the first and second arrangements by translational (i.e., side-to-side) movements. The mechanism 450 can be further configured to move the first and second desiccant coated substrates 441, 442 toward and away from the condenser coils 411 and the evaporator coils 421 by additional translational movements.

The dehumidification system 401 can further include a controller 451 that is coupled to the mechanism 450 and is configured to control a frequency of switching between the first and second arrangements where the frequency of switching is controllable based at least partially on a solid desiccant type coating the first and second desiccant coated substrates 441, 442 as well as other factors including, but not limited to, temperatures of the first and second airflows A5 and A6, relative humidities of the first and second airflows A5 and A6, dehumidification requirements of the dehumidification system 401, etc. The controller 451 can be coupled to the mechanism 450 and can include a processor, a memory, an input/output (I/O) unit by which the processor is communicative with the dehumidification system 401 and sensors deployed therein and a servo unit by which the processor controls operations of the mechanism. The memory has executable instructions stored thereon, which are readable and executable by the processor. When the executable instructions are read and executed by the processor, the processor is caused to receive data and information from the dehumidification system 401 and the sensors and to control the operations of the mechanism 450 via the servo unit at least partially in accordance with the data and information.

Technical effects and benefits of the present invention are the provision of an HVAC&R system in which solid desiccant is used for dehumidification and where the structure and/or operation of the vapor compression portion and/or the AHU of the HVAC&R system does not need alteration. That is, the vapor compression portion and/or the AHU of the HVAC&R system does not need to be able to accommodate reversals of refrigerant flows and/or air path switches as is currently required when solid desiccants are used for dehumidification. In addition, the heat exchanger coils do not need to be coated with desiccant, thus eliminating manufacturing and service complexity. Also, by keeping the desiccant loop separated as described above, the HVAC&R system provides for opportunities for independent replacement/repair of the dehumidification and cooling subsystems.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the technical concepts in the form disclosed. Many modifications and variations will be apparent to those of ordinary skill in the art without departing from the scope of the invention as defined in the appended claims. The embodiments were chosen and described in order to best explain the principles of the invention and the practical application, and to enable others of ordinary skill in the art to understand the invention for various embodiments with various modifications as are suited to the particular use contemplated.

While the preferred embodiments of the invention have been described, it will be understood that those skilled in the art, both now and in the future, may make various improvements and enhancements which fall within the scope of the claims which follow. These claims should be construed to maintain the proper protection for the invention first described.

## Claims

1. A dehumidification system (101), comprising:
a first heat exchanger side (110) for heating a first airflow (A1);
a second heat exchanger side (120) for cooling a second airflow (A2); and
a dehumidification assembly (130) comprising a solid desiccant coated substrate (140) and a mechanism (150) to which the solid desiccant coated substrate is attached,
the mechanism (150) being configured to continuously drive movements of the solid desiccant coated substrate (140) between:
a first position at which the solid desiccant coated substrate (140) faces the second heat exchanger side (120) for dehumidification of the first airflow (A1), and
a second position at which the solid desiccant coated substrate (140) faces the first heat exchanger side (110) for regeneratively releasing moisture to the second airflow (A2).

2. The dehumidification system (101) according to claim 1, wherein the first and second airflows (A1, A2) are at least one of constituents of a common airflow and constituents of different airflows.

3. The dehumidification system (101) according to any preceding claim, wherein the solid desiccant coated substrate (140) comprises a substrate (141) that is porous to the first and second airflows (A1, A2).

4. The dehumidification system (101) according to any preceding claim, wherein a speed that the mechanism (150) continuously drives the movements of the solid desiccant coated substrate (140) is controllable;
optionally wherein the speed that the mechanism (150) continuously drives the movements of the solid desiccant coated substrate (140) is controllable based on at least one or more of a solid desiccant (142) type coating the first and second desiccant coated substrates, temperatures of the first and second airflows (A1, A2), relative humidities of the first and second airflows (A1, A2) and dehumidification requirements.

5. The dehumidification system (101) according to claim 4, further comprising a controller (151) coupled to the mechanism (150) and configured to control the speed.

6. The dehumidification system (101) according to any preceding claim, wherein:
the mechanism (150) comprises a rotating spindle (152), and
the solid desiccant coated substrate (140) comprises a first solid desiccant coated substrate (1401) attached to a first side of the rotating spindle (152) and a second solid desiccant coated substrate (1402) attached to a second side of the rotating spindle;
or wherein the mechanism (150) comprises rollers (153) and the solid desiccant coated substrate (140) comprises at least a portion of a belt (1403) wrapped around the rollers.

7. A dehumidification system (301), comprising:
a first heat exchanger side (310) for heating a first airflow (A3);
a second heat exchanger side (320) for cooling a second airflow (A4); and
a dehumidification assembly (330) comprising first (341) and second (342) supplies of solid desiccant coated beads and a mechanism (350) configured to arrange the first and second supplies of solid desiccant coated beads in and to switch between:
a first arrangement in which the first and second supplies of solid desiccant coated beads form falling bead curtains adjacent to the second heat exchanger side (320) and the first heat exchanger side (310), respectively, and
a second arrangement in which the first and second supplies of solid desiccant coated beads form falling bead curtains adjacent to the first heat exchanger side (310) and the second heat exchanger side (320), respectively.

8. The dehumidification system (301) according to claim 7, wherein the first and second airflows (A3, A4) are at least one of constituents of a common airflow and constituents of different airflows.

9. The dehumidification system (301) according to claim 7 or 8, further comprising:
a first set of containers (361) configured to contain the first supply of solid desiccant coated beads (341); and
a second set of containers (362) configured to contain the second supply of solid desiccant coated beads (342);
optionally wherein the mechanism (350) is configured to transfer the first and second supplies of solid desiccant coated beads (341, 342) between the first and second sets of containers (361, 362) between the first and second arrangements.

10. The dehumidification system (301) according to any of claims 7 to 9, further comprising a controller (351) coupled to the mechanism (350) and configured to control a frequency of switching between the first and second arrangements;
optionally wherein the frequency of switching is controllable based on at least one or more of a solid desiccant type coating the first and second supplies of beads (341, 342), temperatures of the first and second airflows (A3, A4), relative humidities of the first and second airflows and dehumidification requirements.

11. A dehumidification system (401), comprising:
a first heat exchanger side (410) for heating a first airflow (A5);
a second heat exchanger side (420) for cooling a second airflow (A6); and
a dehumidification assembly (430) comprising first (441) and second (442) solid desiccant coated substrates and a mechanism (450) to which the first and second solid desiccant coated substrates are attached,
the mechanism (450) being configured to arrange the first and second solid desiccant coated substrates (441, 442) in and to switch between:
a first arrangement at which the first and second solid desiccant coated substrates (441, 442) are positioned in the second (A6) and first (A5) airflows, respectively, and
a second arrangement at which the first and second solid desiccant coated substrates (441, 442) are positioned in the first (A5) and second (A6) airflows, respectively.

12. The dehumidification system (401) according to claim 11, wherein the first and second airflows (A5, A6) are at least one of constituents of a common airflow and constituents of different airflows.

13. The dehumidification system (401) according to claim 11 or 12, wherein the first and second solid desiccant coated substrates (441, 442) comprise substrates (4411, 4421) that are porous to the first and second airflows (A5, A6).

14. The dehumidification system (401) according to any of claims 11 to 13, wherein the mechanism (450) is configured to translate the first and second solid desiccant coated substrates (441, 442) between the first and second arrangements.

15. The dehumidification system (401) according to any of claims 11 to 14, further comprising a controller (451) coupled to the mechanism (450) and configured to control a frequency of switching between the first and second arrangements;
optionally wherein the frequency of switching is controllable based on at least one or more of a solid desiccant type coating the first and second solid desiccant coated substrates (441, 442), temperatures of the first and second airflows (A5, A6), relative humidities of the first and second airflows and dehumidification requirements.
